# EUROPÄISCHE PATENTANMELDUNG

(11) **EP 2 156 876 A1**
(43) Veröffentlichungstag der Anmeldung: **24.02.2010**
(21) Anmeldenummer: 09009220.6
(22) Anmeldetag: 15.07.2009
(51) Int. Cl.: B01D 46/10, B01D 46/00, B60H 3/06

(54) **Filterelement mit einem Deckel mit federnden Verbindungselementen**

(30) Priorität: 01.08.2008 DE 102008035874
(71) Anmelder: Carl Freudenberg KG, 69469 Weinheim (DE)
(72) Erfinder: Capuani, Peter, 69483 Waldmichelbach (DE); Stösser, Thomas, 68518 Viernheim (DE); Reinhardt, Heinz, Dr., 68535 Edingen (DE)

(57) **Zusammenfassung**

Eine Anordnung umfassend ein Filtergehäuse (1) und ein Filterelement (2), welches in einer Öffnung (3) des Filtergehäuses (1) positioniert ist, wobei das Filterelement (2) einen Faltenbalg (4) aus einem Filtermedium (5) aufweist, welcher mit einem Deckel (6) zum Verschließen der Öffnung (3) des Filtergehäuses (1) verbunden ist, ist im Hinblick auf die Aufgabe, eine Anordnung der eingangs genannten Art derart auszugestalten und weiterzubilden, dass diese bei teilearmem Aufbau eine hohe Funktionstauglichkeit zeigt, **dadurch gekennzeichnet, dass** der Deckel (6) mittels federnder Verbindungselemente (7) dichtend unmittelbar, nämlich ohne Zwischenlage einer komprimierbaren Dichtung, an einer Wandung (8) des Filtergehäuses (1) anliegt.

## Beschreibung

### Technisches Gebiet

Die Erfindung betrifft eine Anordnung umfassend ein Filtergehäuse und ein Filterelement, welches in einer Öffnung des Filtergehäuses positioniert ist, wobei das Filterelement einen Faltenbalg aus einem Filtermedium aufweist, welcher mit einem Deckel zum Verschließen der Öffnung des Filtergehäuses verbunden ist.

### Stand der Technik

Filterelemente der genannten Art sind aus dem Stand der Technik bereits bekannt und werden in Filtergehäuse eingesetzt. Dabei verschließt der Deckel des Filterelements eine Öffnung des Filtergehäuses, welche den Faltenbalg aufnimmt. Filtergehäuse dieser Art finden in Klima- bzw. Luftführungssystemen Anwendung, in welche das Filterelement eingeschoben wird.

In der DE 102 45 427 A1 und der EP 1 304 244 B1 wird zwischen dem Deckel des Filterelements und der Wandung des Filtergehäuses eine komprimierbare Dichtungslage eingelegt. Diese wird beim Festlegen des Deckels im Filtergehäuse komprimiert. Die bekannten Filterelemente sind aufwendig in der Fertigung und daher relativ teuer.

Des Weiteren zeigen sie den Nachteil, dass stets eine Dichtung angefertigt werden muss, die zwischen Deckel und Wandung des Filtergehäuses passend einfügbar ist. Hiermit ist ein erheblicher Arbeitsaufwand verbunden.

### Darstellung der Erfindung

Der Erfindung liegt daher die Aufgabe zugrunde, eine Anordnung der eingangs genannten Art derart auszugestalten und weiterzubilden, dass diese bei teilearmem Aufbau eine hohe Funktionstauglichkeit zeigt.

Erfindungsgemäß wird die voranstehende Aufgabe mit den Merkmalen des Patentanspruchs 1 gelöst. Danach ist die eingangs genannte Anordnung **dadurch gekennzeichnet, dass** der Deckel mittels federnder Verbindungselemente dichtend unmittelbar, nämlich ohne Zwischenlage einer komprimierbaren Dichtung, an einer Wandung des Filtergehäuses anliegt.

Erfindungsgemäß ist erkannt worden, dass federnde Verbindungselemente erlauben, den Deckel unmittelbar gegen die Wandung des Filtergehäuses dichtend zu pressen. Überraschend hat sich herausgestellt, dass bei ausreichender Anpresskraft des Deckels an die Wandung des Filtergehäuses eine dichtende Anlage ohne komprimierbare Dichtung möglich ist. Zwischen der Wandung des Filtergehäuses und dem Deckel liegt daher keine Dichtung oder ein weiteres Bauteil. Hierdurch ist ein teilearmer Aufbau der Anordnung bei hoher Funktionstauglichkeit gewährleistet. Folglich ist die eingangs genannte Aufgabe gelöst.

Vor diesem Hintergrund könnte der Deckel als starre, steife Platte ausgestaltet sein, welche ohne Zwischenlage eines weiteren Bauteils unmittelbar an der Wandung des Filtergehäuses anliegt. Hierdurch kann allein durch Flächen- oder Linienpressung der Platte gegen die Wandung des Filtergehäuses eine Abdichtung erzielt werden. Sowohl das Filterelement als auch der Deckel können einen äußerst teilearmen Aufbau aufweisen.

Die Verbindungselemente könnten am Deckel angeordnet sein. Durch diese konkrete Ausgestaltung kann der Deckel spritzgusstechnisch einstückig hergestellt werden.

Denkbar ist jedoch auch, die Verbindungselemente der Wandung des Filtergehäuses zuzuordnen, so dass der Deckel ergriffen und gegen die Wandung des Filtergehäuses gepresst werden kann.

Die Verbindungselemente könnten als Rastzungen mit Anlageflächen ausgebildet sein, wobei der Abstand der Anlageflächen von einer Deckelebene geringer ist als, die Dicke einer zu hintergreifenden Anlageebene bzw. der Wandung. Durch diese konkrete Ausgestaltung können die Rastzungen bedingt durch die Dicke der Anlageebene bzw. der Wandung deformiert werden. Durch die Deformierung der zumindest teilweise elastischen Rastzungen wird der Deckel gegen die Anlageebene bzw. die Wandung des Filtergehäuses gepresst. Hierdurch ist eine dichte Anlage des Deckels am Filtergehäuse realisierbar.

Der Deckel könnte eine Labyrinthdichtung aufweisen. Durch diese konkrete Ausgestaltung ist ein Deckel spritzgusstechnisch herstellbar, der sowohl federnde Verbindungselemente als auch eine Dichtung aufweist und dennoch einstückig ausgebildet ist.

Der Faltenbalg könnte zumindest teilweise von einem Rahmen umgeben sein. Hierdurch ist eine Stabilisierung des Faltenbalgs gewährleistet. Vor diesem Hintergrund ist konkret denkbar, dass die Faltenenden, welche dem Rahmen zugewandt sind, vom Rahmen umspritzt sind. Der Rahmen könnte vor diesem Hintergrund spritzgusstechnisch hergestellt sein. Denkbar ist auch, den Deckel und den Rahmen spritzgusstechnisch herzustellen und miteinander durch eine Spritzgusstechnik zu verbinden.

Der Rahmen könnte Dichtungsmittel aufweisen. Durch diese konkrete Ausgestaltung kann der Rahmen an der Innenwandung des Filtergehäuses dichtend anliegen. Vor diesem Hintergrund ist denkbar, dass dem Rahmen Schaumstoffstreifen zugeordnet sind, die eine dichte und relativ feste Anlage an der Innenwandung des Filtergehäuses erlauben.

Der Rahmen könnte als Dichtungsmittel eine angespritzte Dichtlippe aufweisen. Vor diesem Hintergrund ist denkbar, dass der Rahmen als Zwei-Komponenten-Teil durch einen Zwei-Komponenten-Spritzgießvorgang herstellbar ist. Dabei ist konkret denkbar, dass der Rahmen selbst aus Polypropylen und die Dichtlippe aus thermoplastischem Elastomer hergestellt ist. Eine Dichtlippe dieser Art kann V-förmig vom Rahmen abragen. Durch diese konkrete Ausgestaltung ist ein Anpressen der Dichtlippe an die Innenwandung des Filtergehäuses möglich.

Das Filtermedium könnte mindestens eine Lage mit Fasern aufweisen, deren Durchmesser höchstens 10 µm betragen. Ein solches Filtermedium erlaubt, mindestens 90% einer Menge von Feinstaubpartikeln abzuscheiden, deren Durchmesser zwischen 0,3 und 0,5 µm liegen. Des Weiteren ist das Filtermedium gemäß DIN 71460 Teil 1 geeignet, mindestens 92% einer Menge von Feinstaubpartikeln abzuscheiden, deren Durchmesser zwischen 0,5 und 1 µm liegen. Weiter ist das Filtermedium gemäß DIN 71460 Teil 1 geeignet, mindestens 97% einer Menge von Feinstaubpartikeln abzuscheiden, deren Durchmesser zwischen 1 und 5 µm liegen. Schließlich ist das Filtermedium gemäß DIN 71460 Teil 1 geeignet, mindestens 99% einer Menge von Feinstaubpartikeln abzuscheiden, deren Durchmesser mindestens 5 µm betragen. Ein Filtermedium mit den zuvor genannten Abscheidegraden ist im hohen Maße als Feinstaubfilter geeignet.

Mindestens eine Lage könnte Polycarbonat-Fasern aufweisen. Polycarbonat ist besonders temperaturstabil.

Diese Lage könnte ein Flächengewicht von 2 - 30 g/m² zeigen und aus Polyolefin-, PES (Polyester) - oder Polycarbonat-Fasern bestehen, die Durchmesser von 1 - 10 µm aufweisen. Ein Filtermedium mit einer solchen Lage zeigt ein besonders geringes Gewicht und hervorragendes Abscheidevermögen für Feinstpartikel.

Mindestens eine Lage könnte aus Polypropylen-Meltblown-Fasern bestehen. Das Melt-Blown-Verfahren erlaubt eine problemlose Einstellung der Lagenstärke und Lagenporosität.

Mindestens eine weitere Lage könnte Polyester-Fasern, Polyolefin-Fasern oder eine Mischung aus Polyester-Fasern und Polyolefin-Fasem aufweisen. Polyolefine, insbesondere Polypropylen, eignen sich besonders gut zur Durchführung eines Melt-Blown-Verfahrens. Polyester-Fasern sind mechanisch besonders stabil.

Das Filtermedium könnte aus einem mehrlagigen partikelfilternden Bereich aufgebaut sein. Hierdurch können in unterschiedlichen Lagen unterschiedlich große Partikel selektiv abgeschieden werden. Der mehrlagige partikelfilternde Bereich könnte 2- oder 3-lagig aufgebaut sein. Dabei könnte eine Lage als Vorfilter aus einem Polyolefin oder PES mit oder ohne elektrostatischer Aufladung ausgestaltet sein. Dieser könnte ein Flächengewicht von 40 - 120 g/m² zeigen und Fasern mit Durchmessern von 20 - 50 µm aufweisen. Eine weitere Lage könnte aus Polyolefin- oder Polycarbonat-Mikrofasem mit elektrostatischer Aufladung bestehen. Diese Lage könnte ein Flächengewicht von 1 - 30 g/m² und Fasern mit Durchmessern von 1 - 10 µm aufweisen. Eine optionale dritte Lage könnte als Polyolefin- oder PES-Abdecklage mit oder ohne elektrostatische Aufladung ausgestaltet sein. Diese optionale Lage könnte ein Flächengewicht von 10 - 50 g/m² und Fasern mit Durchmessern von 20 - 50 µm aufweisen. Ein solches Filtermedium kann bei hinreichender Stabilität Feinstpartikel abscheiden.

Eine Lage aus Polypropylen-Fasern oder Polycarbonat-Fasern könnte sandwichartig von Lagen aus Polyester-Fasern und/oder Polyolefin-Fasem eingeschlossen sein. Hierdurch kann eine relativ dünne und feinporöse Schicht zur Abscheidung von Feinstpartikeln stabilisiert werden. Besonders bevorzugt könnte eine erste Lage aus Polypropylen-Fasern oder Polyester-Fasern mit Durchmessern von 30 - 50 µm aufgebaut sein und ein Flächengewicht von 70 g/m² aufweisen. An diese Lage könnte sich eine zweite Lage aus Polypropylen-Meltblown-Fasem anschließen, die ein Flächengewicht von 2 bis 8 g/m² aufweist. Der Durchmesser der Polypropylen-Meltblown-Fasern ist kleiner als 10 µm, besonders bevorzugt kleiner als 5 µm. Eine dritte Lage, die als Abdecklage fungiert, könnte aus Polypropylen-Fasern oder Polyester-Fasern aufgebaut sein. Diese Lage könnte ein Flächengewicht von 10 - 50 g/m² aufweisen und Fasern mit einem Durchmesser von 30 - 50 µm aufweisen. Dieser partikelfilternde Bereich ist besonders geeignet, um Ruß abzuscheiden. Des Weiteren erlaubt das Melt-Blown-Verfahren eine kostengünstige Fertigung und problemlose Einstellung der Lagenstärke.

Das Filtermedium könnte in Kombination zu mindestens einem partikelfilternden Bereich einen geruchsadsorbierenden Bereich aufweisen. Hierdurch kann das Filterelement als Kombifilter fungieren und einerseits Partikel und andererseits unangenehme Gerüche adsorbieren. Hierdurch kann der Kraftfahrzeuginnenraum von unangenehmen Gerüchen befreit werden.

Vor diesem Hintergrund könnte der geruchsadsorbierende Bereich des Filtermediums Aktivkohlepartikel oder Flächengebilde aufweisen, die Aktivkohle aufweisen. Die Verwendung von Aktivkohle erlaubt effizient die Filterung unangenehmer Gerüche. Der geruchsadsorbierende Bereich könnte körnige Aktivkohle mit einer Feinheit von 20 x 150 mesh, kugelförmige Aktivkohle oder Flächengebilde aufweisen, die aus Aktivkohlefasern bestehen.

Die Aktivkohle könnte durch eine Trägerlage aus Polyester mit einem Flächengewicht von 60 g/m² aufgenommen sein. Hierdurch ist die Aktivkohle einem bestehenden Lagenverbund separat zuordenbar, ohne dass Aktivkohle unerwünscht in den partikelfilternden Bereich eindringt.

Das Filtermedium könnte Elektretfasern aufweisen. Die Verwendung von Elektretfasern erlaubt eine Steigerung der Filtereffizienz des Filtermediums, da durch elektrostatische Aufladung Schwebeteilchen aus der Luft auch dann am Filtermedium angelagert werden, wenn andere Abscheidemechanismen wie z.B. Trägheitskräfte oder auch die Abscheidung durch Diffusion der Partikel an die Fasern des Filtermediums weniger effektiv sind.

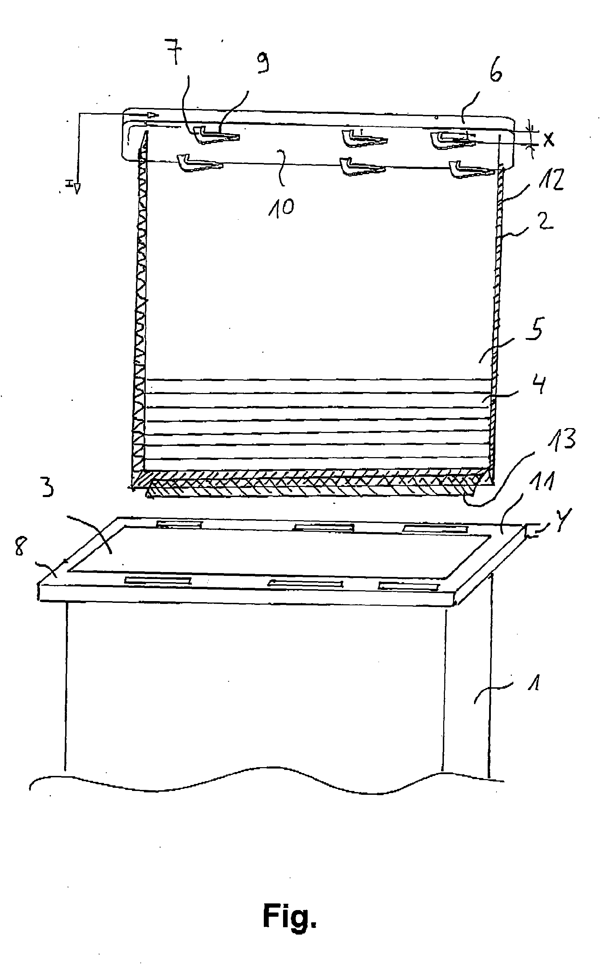

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche, andererseits auf die nachfolgende Erläuterung eines bevorzugten Ausführungsbeispiels der erfindungsgemäßen Anordnung anhand der Zeichnung zu verweisen.

In Verbindung mit der Erläuterung des bevorzugten Ausführungsbeispiels anhand der Zeichnung werden auch im Allgemeinen bevorzugte Ausgestaltungen und Weiterbildungen der Lehre erläutert.

### Kurzbeschreibung der Zeichnung

In der Zeichnung zeigt die einzige
- Fig.: eine Anordnung mit einem Filterelement, welches einen Deckel mit Verbindungselementen aufweist, die als Rastzungen ausgebildet sind.

### Ausführung der Erfindung

Die einzige Fig. zeigt eine Anordnung mit einem Filtergehäuse 1 und einem Filterelement 2, welches in einer Öffnung 3 des Filtergehäuses 1 positioniert werden kann. Das Filterelement 2 umfasst einen Faltenbalg 4 aus einem Filtermedium 5, welcher mit einem Deckel 6 zum Verschließen der Öffnung 3 des Filtergehäuses 1 verbunden ist. Der Deckel 6 ist mittels federnder Verbindungselemente 7 dichtend an einer Wandung 8 des Filtergehäuses 1 angelegt- Hierbei liegt keine komprimierbare Dichtung zwischen Deckel 6 und der Wandung 8.

Der Deckel 6 ist als relativ starre und relativ steife Platte aus Kunststoff ausgestaltet, welche ohne Zwischenlage eines weiteren Bauteils unmittelbar an der Wandung 8 des Filtergehäuses 1 anliegt. Dabei sind die Verbindungselemente 7 am Deckel 6 angeordnet.

Die Verbindungselemente 7 sind als Rastzungen mit Anlageflächen 9 ausgebildet, wobei der Abstand X der Anlageflächen 9 von einer Deckelebene 10 geringer ist als die Dicke Y einer zu hintergreifenden Anlageebene 11.

Der Deckel 6 weist eine Labyrinthdichtung auf, die in der Fig. nicht gezeigt ist.

Das Filterelement 2 weist einen Faltenbalg 4 auf, der zumindest teilweise von einem Rahmen 12 umgeben ist. Der Rahmen 12 weist Dichtungsmittel 13 auf, die als angespritzte Dichtlippe ausgestaltet sind. Die angespritzte Dichtlippe ragt V-förmig vom Rahmen 12 ab.

Das Filtermedium 5 weist mindestens eine Lage mit Fasern auf, deren Durchmesser höchstens 10 µm betragen. Das Filtermedium 5 weist mehrere Lagen auf, die einen partikelfilternden Bereich ausbilden. Das Filtermedium 5 weist in Kombination zu mindestens einem partikelfilternden Bereich einen geruchsadsorbierenden Bereich auf. Das Filtermedium 5 weist Aktivkohlepartikel auf. Des Weiteren weist das Filtermedium 5 Elektretfasern auf. Hierdurch ist das Filterelement 2 als Feinstaubfilterelement zur Verwendung in Kraftfahrzeugen geeignet.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

Abschließend sei ganz besonders hervorgehoben, dass das zuvor ausgewählte Ausführungsbeispiel lediglich zur Erörterung der erfindungsgemäßen Lehre dient, diese jedoch nicht auf dieses Ausführungsbeispiel einschränkt.

## Patentansprüche

1. Anordnung umfassend ein Filtergehäuse (1) und ein Filterelement (2), welches in einer Öffnung (3) des Filtergehäuses (1) positioniert ist, wobei das Filterelement (2) einen Faltenbalg (4) aus einem Filtermedium (5) aufweist, welcher mit einem Deckel (6) zum Verschließen der Öffnung (3) des Filtergehäuses (1) verbunden ist,
**dadurch gekennzeichnet, dass** der Deckel (6) mittels federnder Verbindungselemente (7) dichtend unmittelbar, nämlich ohne Zwischenlage einer komprimierbaren Dichtung, an einer Wandung (8) des Filtergehäuses (1) anliegt.

2. Anordnung nach Anspruch 1, **dadurch gekennzeichnet, dass** der Deckel (6) als starre, steife Platte ausgestaltet ist, welche ohne Zwischenlage eines weiteren Bauteils unmittelbar an der Wandung (8) des Filtergehäuses (1) anliegt.

3. Anordnung nach Anspruch 1 oder 2, **dadurch gekennzeichnet, dass** die Verbindungselemente (7) am Deckel (6) angeordnet sind.

4. Anordnung nach Anspruch 3, **dadurch gekennzeichnet, dass** die Verbindungselemente (7) als Rastzungen mit Anlageflächen (9) ausgebildet sind, wobei der Abstand (x) der Anlageflächen (9) von einer Deckelebene (10) geringer ist, als die Dicke (y) einer zu hintergreifenden Anlageebene (11).

5. Anordnung nach einem der Ansprüche 1 bis 4, **dadurch gekennzeichnet, dass** der Deckel (6) eine Labyrinthdichtung aufweist.

6. Anordnung nach einem der Ansprüche 1 bis 5, **dadurch gekennzeichnet, dass** der Faltenbalg (4) zumindest teilweise von einem Rahmen (12) umgeben ist.

7. Anordnung nach einem der Ansprüche 1 bis 6, **dadurch gekennzeichnet, dass** der Rahmen (12) Dichtungsmittel (13) aufweist.

8. Anordnung nach Anspruch 7, **dadurch gekennzeichnet, dass** der Rahmen (12) als Dichtungsmittel (13) eine angespritzte Dichtlippe aufweist.

9. Anordnung nach einem der Ansprüche 1 bis 8, **dadurch gekennzeichnet, dass** das Filtermedium (5) mindestens eine Lage mit Fasern aufweist, deren Durchmesser höchstens 10 µm betragen.

10. Anordnung nach einem der Ansprüche 1 bis 9, **dadurch gekennzeichnet, dass** das Filtermedium (5) mehrere Lagen aufweist, die einen partikelfilternden Bereich ausbilden.

11. Anordnung nach einem der Ansprüche 1 bis 10, **dadurch gekennzeichnet, dass** das Filtermedium (5) in Kombination zu mindestens einem partikelfilternden Bereich einen geruchsadsorbierenden Bereich aufweist.

12. Anordnung nach Anspruch 11, **dadurch gekennzeichnet, dass** das Filtermedium (5) Aktivkohlepartikel und/oder ein Flächengebilde aufweist, welches Aktivkohle enthält.

13. Anordnung nach einem der Ansprüche 1 bis 12, **dadurch gekennzeichnet, dass** das Filtermedium (5) Elektretfasern aufweist.
